Europäisches Patentamt

European Patent Office

Office européen des brevets

(11) Numéro de publication: **0 254 635
B1**

(12) # FASCICULE DE BREVET EUROPEEN

(45) Date de publication du fascicule du brevet:
**02.11.89**

(51) Int. Cl.⁴: **B62D 25/04, B60R 13/02**

(21) Numéro de dépôt: **87401685.0**

(22) Date de dépôt: **17.07.87**

(54) Ensemble d'habillage pour entrée de porte de véhicule.

(30) Priorité: **22.07.86 FR 8610631**

(43) Date de publication de la demande:
**27.01.88 Bulletin 88/4**

(45) Mention de la délivrance du brevet:
**02.11.89 Bulletin 89/44**

(84) Etats contractants désignés:
**DE GB IT**

(56) Documents cités:
**DE-A- 2 904 667
DE-A- 3 313 658
DE-B- 1 147 496
FR-A- 2 145 634
FR-A- 2 434 056
FR-A- 2 560 657**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Herlem, Jean-Paul, 17 rue Alfred de Vigny,
F-78180 Montigny Le Bretonneux(FR)**

(74) Mandataire: **Durand, Yves Armand Louis et al, Cabinet Z.
Weinstein 20, Avenue de Friedland, F-75008 Paris(FR)**

ACTORUM AG

## Description

La présente invention concerne un ensemble d'habillage pour le pied ou montant milieu de la carosserie d'un véhicule automobile, tel que défini dans le préambule de la revendication 1 et connu par exemple de FR-A 2 145 634.

On sait qu'un pied milieu se compose en général de plusieurs éléments en tôle qui sont mis en forme par emboutissage et qui comprennent généralement: un élément intermédiaire appelé "renfort", qui est généralement plan; un élément embouti, situé du côté intérieur du véhicule et appelé "doublure"; et un autre élément embouti situé du côté extérieur du véhicule et correspondant sensiblement à l'épaisseur de la porte.

Les éléments ci-dessus se rejoignent en extrémité pour constituer une feuillure qui s'étend sur toute la hauteur de l'entrée de porte. Cette feuillure est généralement recouverte d'un profilé de finition en matériau élastomère extrudé qui vient chausser la feuillure et qui présente une partie en forme de U entre les branches duquel est insérée ladite feuillure, comme décrit dans le document FR-A 2 145 634.

Il est également connu d'après ce document d'habiller le pied milieu à l'aide d'une plaque de garniture située du côté de l'habitacle du véhicule et habillée d'un tampon en mousse élastique. La plaque de garniture repose par ses bords sur le profilé de finition en formant à cet endroit une certaine discontinuité de raccordement, et elle est fixée directement au pied milieu de la carrosserie par des éléments de fixation élastiques, ce milieu de la carrosserie par des éléments de fixation élastiques, ce qui exige la réalisation de perçages sur ce pied milieu et par conséquent un temps de montage et un coût de main d'œuvre relativement importants et disproportionnées à partir du moment où il s'agit d'effectuer la simple fixation d'un élément de garnissage.

La présente invention a pour but de remédier aux inconvénients ci-dessus en proposant un ensemble d'habillage utilisant un profilé de finition perfectionné qui peut être chaussé sur le pied milieu et qui coopère avec un élément de garnissage d'une façon telle que la fixation de cet élément de garnissage soit assurée uniquement par l'intermédiaire du profilé tout en réalisant un raccordement pleinement satisfaisant entre profilé et élément de garnissage.

A cet effet, l'invention a pour objet un ensemble d'habillage pour entrée de porte de véhicule automobile, constitué d'une part d'au moins un profilé de finition présentant en section transversale sensiblement la forme d'un U chaussé sur une feuillure appartenant au pied milieu de la carrosserie du véhicule et s'étendant sur toute la hauteur d'entrée de porte du véhicule, et d'autre part d'au moins un élément de garnissage, situé du côté de l'habitacle du véhicule et recouvrant le pied milieu, caractérisé en ce que l'élément de garnissage présente une forme générale recourbée comportant d'une part une paroi interne fixée positivement sur le profilé de finition grâce à des moyens de clippage, et d'autre part des bords tombés se raccordant au profilé grâce à une lèvre faisant extérieurement saillie de ce profilé et rabattue en direction des bords tombés pour ainsi réaliser une continuité du raccordement et le camouflage des moyens de clippage.

Les moyens de clippage précités sont constitués par une première rainure ménagée du côté extérieur de l'une des branches du U du profilé, cette première rainure étant sensiblement orthogonale à la seconde rainure formée entre les branches du U, et coopérant par clippage avec une arête appartenant à la paroi interne de l'élément de garnissage.

La lèvre précitée fait extérieurement saillie du côté de la base du U du profilé.

Suivant encore une autre caractéristique, le profilé de l'invention comporte une protubérance entre la première rainure et la lèvre précitées, cette protubérance s'intercalant entre l'arête et les bords tombés de l'élément de garnissage.

Suivant une autre caractéristique de l'invention, dans la seconde rainure précitée, font saillie des lèvres venant de matière avec au moins l'une des branches du U et assurant le serrage du profilé sur la feuillure du pied milieu.

Le profilé de l'invention est encore caractérisé par une partie en forme de bec faisant saillie dans la première rainure et coopérant avec une autre partie en forme de bec prévue à l'extrémité libre de l'arête précitée.

Suivant encore une autre caractéristique de l'invention, la base du U du profilé comporte, du côté extérieur, une troisième rainure recevant le bord de l'élément de garnissage et dont l'un des côtés se prolonge par la lèvre précitée faisant saillie de la base du U.

On précisera encore ici que les lèvres de serrage du profilé sur la feuillure du pied milieu et la lèvre faisant saillie de la base du U sont en matière souple, tandis que la partie restante du profilé, qui est obtenu par extrusion, est en une matière dure.

Mais d'autres caractéristiques et avantages de l'invention apparaîtront mieux dans la description détaillée qui suit et se réfère aux dessins annexés, donnés uniquement à titre d'exemple, et dans lesquels:

– la figure 1 est une vue en coupe transversale d'un pied milieu de véhicule équipé d'un profilé conforme à l'invention;

– la figure 2 est une vue agrandie de la partie encadrée II de la figure 1;

– la figure 3 est une vue en coupe transversale d'un autre mode de réalisation de profilé conforme à l'invention et destiné à coopérer, comme dans la figure 1, avec un élément de garnissage; et

– la figure 4 est une vue à plus grande échelle de la partie encadrée IV de la figure 3.

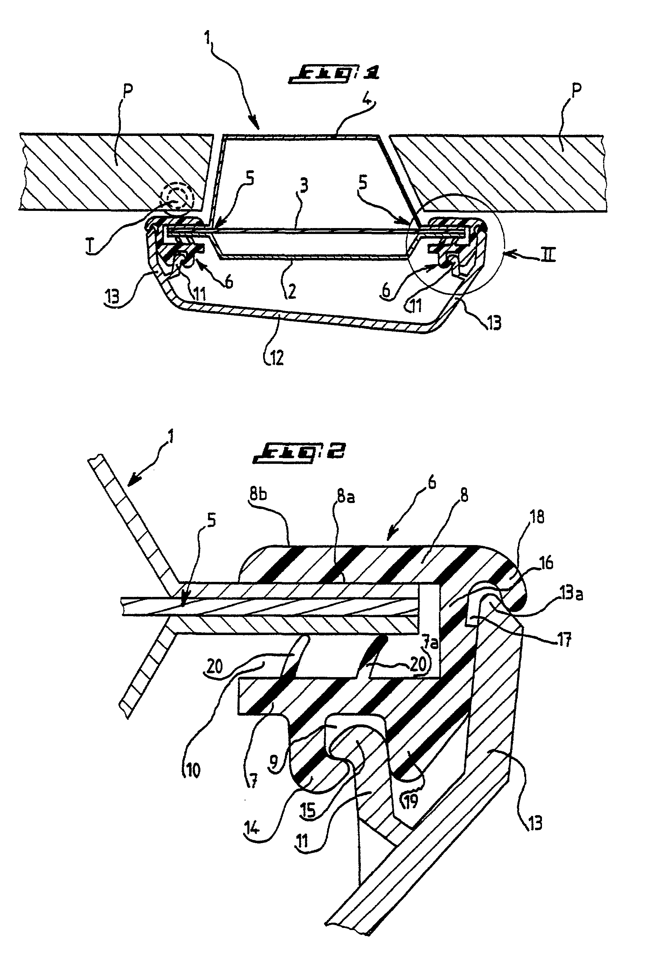

En se reportant à la figure 1, on voit un montant ou pied milieu 1 qui comprend, comme connu en soi, un élément embouti 2 formant doublure et situé du côté intérieur de l'habitacle d'un véhicule, un élément intermédiaire formant renfort 3, et un élément embouti 4 situé du côté extérieur du véhicule et comportant une épaisseur égale à celle des portes du véhicule visibles en P. Les trois éléments 2, 3 et 4 se rejoignent en extrémité pour former une feuillure 5 sur laquelle est chaussé le profilé 6 conforme à la présente invention.

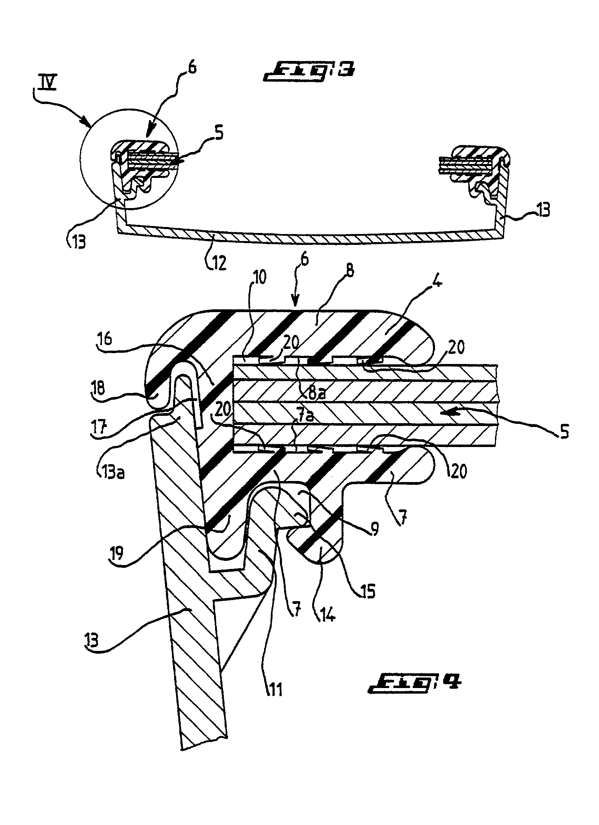

Comme on le voit mieux sur la figure 2, ce profilé 6 présente grossièrement en section transversale la forme d'un U chaussé sur la feuillure 5 et dont l'une 7 des branches parallèles 7, 8, comporte une première rainure 9 qui est sensiblement orthogonale à la deuxième rainure 10 formée par l'espace entre les deux branches 7, 8 du profilé 6 chaussé par lesdites branches sur la feuillure 5.

La première rainure 9 coopère par clippage avec une arête ou analogue 11 appartenant à ou venant de matière avec la paroi interne d'un élément de garnissage 12 qui présente une forme générale recourbée avec des bords tombés 13.

Plus précisément, la première rainure 9 comporte une partie en forme de renflement ou de bec 14 qui fait saillie vers l'intérieur de la rainure 9 et coopère avec une autre partie en forme de renflement ou de bec 15 prévue à l'extrémité de l'arête 11.

Ainsi, comme on le comprend bien, l'arête 11 pourra être clippée de manière élastique dans la rainure 9 du profilé en matériau élastomère 6.

La base 16 du profilé en U 6 comporte une troisième rainure 17 recevant l'extrémité libre 13a du bord tombé 13, comme on le voit bien sur la figure 2.

On voit en 18 une lèvre faisant saillie vers l'extérieur de la base 16 du U du profilé, cette lèvre 18 étant rabattue en direction du bord 13 de l'élément de garnissage 12, et réalisant avantageusement une continuité de raccordement entre le profilé 6 et ledit élément de garnissage 12.

Comme on le voit encore clairement sur la figure 2, le profilé 6, forme, du côté de la branche 7 du U une protubérance 19 qui s'étend entre la première rainure 9 et la troisième rainure 17, cette protubérance s'intercalant entre l'arête 11 et le bord tombé 13 de l'élément de garnissage 12.

On notera ici que le bord tombé 13, lorsque l'élément de garnissage 12 est clippé sur le profilé 6, forme un recouvrement qui camoufle le clippage, étant entendu encore une fois que la lèvre 18 du profilé 6 assure un raccordement continu et susceptible d'absorber les variations d'épaisseur de l'élément de garnissage 12.

On a montré en 20 sur la figure 2 des lèvres venant de matière avec la branche 7 du profilé 6 et faisant saillie vers l'intérieur de la deuxième rainure 10 pour ainsi assurer le serrage du profilé 6 sur la feuillure 5 du pied milieu 1.

Selon cette disposition, la branche 8 du U du profilé 6, comporte une face intérieure 8a qui est lisse et vient s'appliquer sur la feuillure 5, sous l'effet de la poussée des lèvres 20 venant de matière avec la face interne 7a de la branche 7.

Le profilé 6 est réalisé par extrusion avec éventuellement un tube d'étanchéité montré schématiquement en T sur la figure 1 et qui peut être écrasé par la porte P en position de fermenture. Le tube T est ici représenté en position non écrasée pour plus de clarté.

Le profilé selon cette invention est de préférence réalisé par extrusion de deux matières, de façon à obtenir des lèvres 18 et 20 qui soient en une matière souple, tandis que la partie restante du profilé est en matériau dur.

On pourrait parfaitement imaginer, sans sortir du cadre de l'invention, que le profilé 6 puisse être fixé sur un élément métallique autre que la feuillure 5.

On notera encore ici que la branche 8 du U du profilé 6 présente une surface lisse 8b du côté extérieur du véhicule, cette face se prolongeant en quelque sorte par la lèvre 18 du côté de la base 16 du U, cette lèvre 18 assurant la continuité avec l'élément de garnissage 12. On ajoutera encore que la réalisation visible sur la figure 2 présente l'avantage de fixer la position latérale du profilé tout en lui donnant une souplesse dans le sens longitudinal pour adapter le clippage de l'élément de garniture 12 qui, bien que cela n'ait pas été représenté, peut comporter un revêtement de tissu, de simili-cuir ou analogue. La réalisation visible sur les figures 3 et 4 est sensiblement identique à celle représentée sur les figures 1 et 2, sauf qu'ici les faces internes 7a et 8a des branches 7 et 8 respectivement du profilé en U 6 comportent chacune des lèvres 20 qui prennent élastiquement appui sur les deux côtés de la feuillure 5.

On a donc réalisé suivant l'invention un profilé assurant une continuité de raccordement ou de finition au niveau des accostages entre l'élément de garnissage et les bords d'entrée de porte au niveau du pied milieu. En outre, un tel profilé permet non seulement de protéger les entrées de porte avant montage des éléments de garnissage, mais permet aussi d'absorber toutes les dispersions de caisse et d'épaisseur de l'habillage de l'élément de garnissage, grâce à la lèvre 18. Enfin, les lèvres 20 permettent avantageusement l'absorption locale des variations d'épaisseur dues au nombre de tôles formant la feuillure 5.

Bien entendu, l'invention n'est nullement limitée aux modes de réalisation décrits et illustrés qui n'ont été donnés qu'à titre d'exemple.

**Revendications**

1. Ensemble d'habillage pour entrée de porte de véhicule automobile, constitué d'une part d'au moins un profilé de finition (6) présentant en section transversale sensiblement la forme d'un U chaussé sur une feuillure (5) appartenant au pied milieu (1) de la carrosserie du véhicule et s'étendant sur toute la hauteur d'entrée de porte du véhicule, et d'autre part d'au moins un élément de garnissage (12), situé du côté de l'habitacle du véhicule et recouvrant le pied milieu (1), caractérisé en ce que l'élément de garnissage (12) présente une forme générale recourbée comportant d'une part une paroi interne fixée positivement sur le profilé de finition (6) grâce à des moyens de clippage (9, 11), et d'autre part des bords tombés (13) se raccordant au profilé (6) grâce à une lèvre (18) faisant extérieurement saillie de ce profilé et rabattue en direction des bords tombés (13) pour ainsi réaliser une continuité du raccordement et le camouflage des moyens de clippage (9, 11).

2. Profilé selon la revendication 1, caractérisé en ce que les moyens de clippage sont constitués par une première rainure (9) ménagée du côté extérieur de l'une (7) des branches du U du profilé (6), cette première rainure étant sensiblement orthogonale à la seconde rainure (10) formée entre les branches (7, 8) du U et coopérant par clippage avec une arête (11) appartenant à la paroi interne de l'élément de garnissage (12).

3. Profilé selon la revendication 1 ou 2, caractérisé en ce que la lèvre (18) fait extérieurement saillie du côté de la base (16) du U du profilé (6).

4. Profilé selon l'une des revendications 1 à 3, caractérisé en ce qu'il comporte une protubérance (19) entre la première rainure (9) et la lèvre précitée (18), cette protubérance s'intercalant entre l'arête (11) et les bords tombés (13) de l'élément de garnissage (12).

5. Profilé selon l'une des revendications 1 à 4, caractérisé en ce que, dans la seconde rainure précitée (10), font saillie des lèvres (20) venant de matière avec au moins l'une des branches (7, 8) du U et assurant le serrage du profilé (6) sur la feuillure (5) du pied milieu (1).

6. Profilé selon l'une des revendications précédentes, caractérisé par une partie en forme de bec (14) faisant saillie dans la première rainure (9) et coopérant avec une autre partie en forme de bec (15) prévue à l'extrémité libre de l'arête précitée (11).

7. Profilé selon l'une des revendications précédentes, caractérisé en ce que la base (16) du U du profilé (6) comporte du côté extérieur une troisième rainure (17) recevant le bord (13a) de l'élément de garnissage et dont l'un des côtés se prolonge par la lèvre précitée (18) faisant saillie de la base (16) du U.

8. Profilé selon l'une des revendications précédentes, caractérisé en ce que les lèvres (20) de serrage du profilé (6) sur la feuillure (5) du pied milieu (1) et la lèvre (18) faisant saillie de la base (16) du U sont en matière souple, tandis que la partie restante du profilé, obtenu par extrusion, est en une matière dure.

## Patentansprüche

1. Verkleidungsanordnung für den Türeingang eines Kraftfahrzeuges, bestehend einerseits aus wenigstens einer Verblendprofilleiste (6) im wesentlichen U-förmigen Querschnitts, welche auf einen, zu dem Mittelfuß (1) des Fahrzeugsaufbaus gehörenden Flansch (5) aufgesteckt ist und sich über die ganze Eingangshöhe der Fahrzeugtür erstreckt, und andererseits aus wenigstens einem im Bereich des Passagierraumes des Fahrzeugs liegenden und den Mittelfuß (1) überdeckenden Auskleidungselement (12), dadurch gekennzeichnet, daß das Auskleidungselement (12) eine allgemeine gekrümmte Gestalt aufweist mit einerseits einer durch Klemmittel (9, 11) positiv an der Verblendprofilleiste (6) befestigten innere Wandung und andererseits mit umgebogenen Rändern (13), die sich an die Profilleiste (6) anschließen, dank einer nach außen dieser Profilleiste vorstehenden und in Richtung auf die umgebogenen Ränder (13) hin umgelegten Lippe (18), um somit einen stetigen Anschlußverlauf und das Verdecken der Klemmittel (9, 11) zu gewährleisten.

2. Profilleiste nach Anspruch 1, dadurch gekennzeichnet, daß die Klemmittel durch eine auf der Außenseite des einen Schenkels (7) des U's der Profilleiste (S) angeordnete erste Nut (9) gebildet wird, wobei diese erste Nut im wesentlichen senkrecht zu der zwischen den Schenkeln (7, 8) des U's gebildeten zweiten Nut (10) verläuft und durch Verklemmung mit einer (11) zu der inneren Wandung des Auskleidungselements (12) gehörenden Kante zusammenwirkt.

3. Profilleiste nach Anspruch 1 oder 2, dadurch gekennzeichnet, daß die Lippe (18) nach außen im Bereich des Steges (16) des U's der Profilleiste (6) vorsteht.

4. Profilleiste nach einem der Ansprüche 1 bis 3, dadurch gekennzeichnet, daß sie eine zwischen der ersten Nut (9) und der vorgenannten Lippe (18) liegende Auskragung aufweist, wobei diese Auskragung zwischen der Kante (11) und den ungebogenen Rändern (13) des Auskleidungselements (12) eingefügt ist.

5. Profilleiste nach einem der Ansprüche 1 bis 4, dadurch gekennzeichnet, daß in die vorgenannte zweite Nut (10) an wenigstens einem der Schenkel (7, 8) des U's angeformte Lippen (20) eingreifen und die Verklemmung der Profilleiste (6) auf den Flansch (5) des Mittelfußes (1) gewährleisten.

6. Profilleiste nach einem der vorangehenden Ansprüche, gekennzeichnet durch einen in die erste Nut (9) vorragenden nasenförmigen Teil (14), der mit einem anderen an dem freien Ende der vorgenannten Kante (11) vorgesehenen nasenförmigen Teil (15) zusammenwirkt.

7. Profilleiste nach einem der vorangehenden Ansprüche, dadurch gekennzeichnet, daß der Steg (16) des U's der Profilleiste (6) auf der Außenseite eine den Rand (13a) des Auskleidungselements aufnehmende dritte Nut (17) aufweist, deren eine Seite durch die von dem Steg (16) des U's abstehende vorgenannte Lippe (18) verlängert wird.

8. Profilleiste nach einem der vorangehenden Ansprüche, dadurch gekennzeichnet, daß die Lippen (20) zur Verklemmung der Profilleiste (6) auf dem Flansch (5) des Mittelfußes (1) und die von dem Steg (16) des U's abstehende Lippe (18) aus einem nachgiebigen Werkstoff bestehen, während der Restteil der durch Strangpressen erhaltenen Profilleiste aus einem harten Werkstoff besteht.

## Claims

1. Trimming arrangement for door entrance of automotive vehicle, consisting on the one hand of at least one finishing section (6) with a substantially U-shaped cross-section, fitted onto a ledge (5) belonging to the middle foot (1) of the vehicle body and extending throughout the entrance heigth of the vehicle door and on the other hand of at least one lining element (12) located towards the vehicle passenger space and covering the middle foot (1), characterized in that the lining element (12) has a generally curved shape comprising on the one hand an inner wall positively secured onto the finishing section (6) by clipping means (9, 11) and on the other hand turned-down edges (13) connecting to the section (6) through a lip (18) projecting outwards from this section and folded down towards the turned-down edges (13) to thereby provide a connection continuity and the hiding of the clipping means (9, 11).

2. Section according to claim 1, characterized in that the clipping means consist of a first groove (9) formed outwards of one (7) of the legs of the U of the section (6), this first groove being substantially orthogonal to the second groove (10) formed between the legs (7, 8) of the U and co-operating through clipping with a flange (11) belonging to the inner wall of the lining element (12).

3. Section according to claim 1 or 2, characterized in that the lip (18) projects outwards towards the base (16) of the U of the section (6).

4. Section according to one of claims 1 to 3, characterized in that it comprises a protrusion (19) between the first groove (9) and the aforesaid lip (18), this protrusion being interposed between the flange (11) and the turned-down edges (13) of the lining element (12).

5. Section according to one of claims 1 to 4, characterized in that into the aforesaid second groove (10) are projecting lips (20) bodily integral with at least one of the legs (7, 8) of the U and providing for the clamping of the section (6) onto the ledge (5) of the middle foot (1).

6. Section according to one of the foregoing claims, characterized by a nose-like portion (14) projecting into the first groove (9) and co-operating with another nose-like portion (15) provided at the free end of the aforesaid flange (11).

7. Section according to one of the foregoing claims, characterized in that the base (16) of the U of the section (6) comprises towards the outside a third groove (17) receiving the edge (13a) of the lining element and one side of which is extended by the aforesaid lip (18) projecting from the base (16) of the U.

8. Section according to one of the foregoing claims, characterized in that the lips (20) for clamping the section (6) onto the ledge (5) of the middle foot (1) and the lip (18) projecting from the base (16) of the U are made from a flexible material whereas the remaining part of the section obtained through extrusion is made from a hard material.

Fig.1

Fig.2

EP 0 254 635 B1

_Fig_ 3

_Fig_ 4